# EUROPEAN PATENT SPECIFICATION

(11) **EP 1 693 730 B1**
(45) Date of publication and mention of the grant of the patent: **28.10.2009**
(21) Application number: 06101590.5
(22) Date of filing: 13.02.2006
(51) Int. Cl.: G05B 19/418

(54) **Process for recognising, in a processing cycle performed in sequence in a plurality of separate processing stations, the item to be subjected to the respective processing each time.**
Verfahren zur Erkennung des zur jeweiligen Bearbeitung anstehenden Gegenstandes, welcher in einem Arbeitskreislauf in einer Folge von getrennten Bearbeitungsstationen bearbeitet wird
Procédé de reconnaissance, dans un cycle de traitement effectué en séquence dans une pluralité de stations de travail séparées, d'un article ayant à subir chaque fois ledit traitement

(30) Priority: 22.02.2005 IT BZ20050005
(43) Date of publication of application: 23.08.2006
(73) Proprietor: MICROTEC S.r.l., 39042 Bressanone (Bolzano) (IT)
(72) Inventor: Giudiceandrea, Federico, 39042 Bressanone (Bolzano) (IT)
(74) Representative: Ponchiroli, Simone

(56) References cited:
- WO-A-00/11595
- WO-A-03/019308
- DE-A1- 10 116 575

## Description

The present invention relates to a process for recognising, in a processing cycle performed in sequence in a plurality of separate processing stations, the item to be subjected to the respective processing each time, in accordance with the preamble to claim 1.

The term processing refers to any operation performed on the item, even if the operation does not change the physical characteristics of the item, for example as is the case with a measurement.

In order to arrive at processes less and less dependent on the presence of a human operator and increasingly more suitable for managing situations which may even be complex, it is advisable during processing to be able to know both the identity and all the necessary characteristics of the item.

For example, typically, in the sawmill sector wood in the form of logs, beams or planks is subjected to a sequence of automated processing operations and these processing operations depend in a decisive way on the dimensions, volume, shapes and quality of the wood. Since, considering the possible length of a log, a difference of just one millimetre in defining the size may result in considerable waste, to make the best possible use of the raw material and obtain the largest possible pieces of solid wood a very precise knowledge of a whole set of information about both the type and shape of the wood is essential.

Consequently, in the prior art, in the first processing station at the latest an identification mark is applied to the surface of the item, a dedicated electronic memory is associated with the identification mark and the physical characteristics of the item already known in advance, if they exist, are saved in the electronic memory dedicated to the identification mark. Then, each time the item is about to enter a subsequent processing station, suitable automatic scanner reading means read the identification mark on the surface of the item. In this way, the item can be identified and by assigning it all of the characteristics saved in the electronic memory dedicated to the identification mark read, the processing to be performed on the item can be adapted to these characteristics. An example of this kind of procedure is disclosed in patent WO 00/11595.

However, this known process has disadvantages.

An absolute reading of the identification mark, that is to say, for example a bar code or a number or even text, recognising it reliably, is not always possible. For that to be possible, the identification mark must stand out clearly and must be applied on a surface with uniform colour, which uniformly absorbs the ink to avoid blurring and which then remains uniform with the passage of time.

Many items do not have a surface with these characteristics, for example wood or cardboards, therefore there are often problems relating to the reliability of the reading of the identification mark and consequently recognition of the identification mark. For example, in the case of wood there are bark, rounded parts, knots, holes, resin, cracks, leaves, soil, patches of dirt and other things present, all elements which may cause a false reading of the identification mark.

The damage which would derive from a false reading of an identification mark is obvious, since for the processing the characteristics of another, different item would be associated with the item in question.

It is also known from patent WO 03/019308, a system for identifying pieces of lumber, comprising an identifying apparatus having an imaging device to obtain images and a database to record the images. The identifying apparatus is adapted for identifying pieces of lumber, and for being connected to at least one of a data source for receiving qualitative data on pieces of lumber and an output destination to transfer at least an identification of a piece of lumber thereto.

Such system is able to identify the lumber by means of the steps of: i) recording a fingerprint of a piece of lumber by obtaining at least a first image of a portion of the piece of lumber; and ii) identifying the piece of lumber by obtaining at least a second image of said portion of the piece of lumber and comparing the second image to the fingerprint of the piece of lumber.

The need of the present invention is to develop, starting with the above-mentioned known process, a process by which the item to be subjected to the respective processing each time can be identified with absolute certainty, so that only its own characteristics can be associated with it.

This need is satisfied by a process with the characteristics indicated in the preamble to claim 1.

The invention is based on the inspired idea of no longer using an absolute reading of the identification mark, but a relative reading of it.

In this way, anything that would be an obstacle to an absolute reading, for example any defects in the identification mark, such as blurring, print errors, abrasions and the like, and such as the presence on the surface of the item of additional marks unrelated to the identification mark but interfering with it during the absolute reading, is actually an advantage for the present invention, since by adding further characteristics to the image they facilitate its recognition during a comparison.

This overcomes all of the problems relating to reliability in the reading of the identification mark and consequently the burden of having to apply the identification mark on the surface of the item in a reliably and clearly readable way.

The characteristic claimed in claim 2 allows extreme reliability to be achieved in the process disclosed. The use of digital matrix cameras allows on one hand the images to be detected very clearly and on the other hand, thanks to the significant development of processes for the treatment of the relative digital images, allows an extremely precise comparison between the digital images involved in the present invention.

The characteristic claimed in claim 3 allows an extension of the operating capacity of the process disclosed. In this way, the information relative to the physical characteristics of the item can be updated, to the extent that they changed after processing in the processing station. For example, if a log goes through a barking station, it will be possible to update its status from "with bark" to "debarked", or if in the processing station a plank is shortened, it will be possible to update its length value.

The characteristic claimed in claim 4 also allows an extension of the operating capacity of the process disclosed, completing it and also making it suitable for managing even particularly complex processing cycles, consisting of a plurality of processing stations which are very different from one another. In this way, new information relative to the physical characteristics of the item can be added, to the extent that after processing in the processing station new physical characteristics become interesting or if the processing station is a measuring station in which one or more new specific physical characteristics are detected.

Further advantages and characteristics of the invention are more evident in the description which follows of embodiments of the invention, provided by way of example only and without limiting the invention in any way.

As already indicated, the invention relates to a process for recognising, in a processing cycle performed in sequence in a plurality of separate processing stations, the item to be subjected to the respective processing each time.

Such a process can be applied for example in sawmills.

In this sector, for the sake of economy and simple management, it is to be hoped that the wood could flow to the sawmill without any particular uniformity, that is to say logs, beams, poles, planks and the like all together, and with its characteristics, both natural, such as dimensions, weight, appearance, presence of knots, resins, splits, cracks, rounded parts, colour, etc., and induced by processing, such as shape, status, cuts, stripping, debarking, etc. still to be detected, and that the finished product could then be fed out on the conveyor, without the need for any human intervention except checking.

The process disclosed allows, at any time, all information necessary for processing the item in any processing station in the processing cycle to be available and unique identification of the item when it is in the processing station. This creates the conditions for recognition and management of all of the many different situations which may arise.

For each item to be processed, the process comprises the following three operating steps, to be performed preliminarily:
a) application of an identification mark on the surface of the item;
b) association of a dedicated electronic memory with the identification mark;
c) saving of the physical characteristics of the item already known in advance, if they exist, in the electronic memory dedicated to the identification mark.

These operating steps are performed in the first processing station at the latest.

It is also possible that before reaching the first processing station, part or all of the items already have an identification mark applied to them and an electronic memory in which the characteristics of the item are saved was preliminarily dedicated to this identification mark.

According to the invention, in the first processing station the following additional operating step d) takes place: the image of the identification mark on the surface of the item is detected and this image is electronically saved in the electronic memory dedicated to this identification mark.

Then, in each processing station after the first, according to the invention for each item to be processed there are also five additional operating steps:
e) before the item is fed into the processing station the image of the identification mark on the surface of the item is detected;
f) the image detected during the previous operating step e) is compared with all of the images saved in the various electronic memories dedicated to the various identification marks and the one which most closely resembles the image detected in the previous operating step e) is identified;
g) the identification mark associated with the image saved that was identified in the previous operating step f) is identified;
h) all of the characteristics saved in the electronic memory dedicated to the identification mark identified in the previous step g) are assigned to the item about to enter the processing station;
i) the processing to be performed on the item in the processing station is adapted to the physical characteristics assigned to the item in the previous step h) .

Moreover, appropriately, the images of the item are digital photographs taken using digital matrix cameras.

By way of example, the above-mentioned process is described with reference to a log, a beam and a plank flowing to the sawmill.

In the first processing station at the latest, or even preliminarily, as already indicated, an identification mark is applied to the surface of each and a dedicated electronic memory is associated with the identification mark. Moreover, if they exist, the physical characteristics of the item already known in advance are saved in the electronic memory dedicated to the identification mark. One such characteristic could be, for example, the type of wood, i.e.: a log, beam or plank, or another such characteristic could be the length.

Then, in the processing station, according to the present invention, the image of the identification mark on the surface of the item is detected and this image is electronically saved in the electronic memory dedicated to the identification mark.

This image comprises not just the identification mark but also at least part of the surface of the item, with all of its specific features. For example, in the case of wood, knots, drops of resin, cracks, patches and other things may also be visible in the image.

In each processing station after the first the processing considered most suitable for the processing cycle to be performed can be carried out. It should be noticed that the present invention does not cover the type of processing carried out and that the term processing should be understood to mean any operation carried out on the item.

Returning to the example, it must be remembered that after the first processing station the situation is as follows: there are three different identification marks, one for the log, one for the beam and one for the plank, associated with three different electronic memories, in each of which any physical characteristics of the respective item may be saved.

When the second processing station and all of the subsequent processing stations are reached, the image of the identification mark on the surface of the item is detected, that is to say, on the log, the beam or the plank, before the item is fed into the processing station. This image also comprises not just the identification mark but also at least part of the surface of the item, with all of its specific features. For example, in the case of wood, knots, drops of resin, cracks, patches and other things will also be visible in this image.

This image is then compared with the three images saved in the various electronic memories dedicated to the various identification marks and of these three saved images the one which most closely resembles the image detected in the previous operating step, that is to say, the image detected before the item enters the processing station, is identified.

The identification mark associated with this saved image is identified and in this way it is possible to know if the plank, the log or the beam is entering the processing station. All of the characteristics saved in the memory dedicated to the identification mark identified in the previous operating step are assigned to the item about to enter the processing station, and the processing to be performed on the item is adapted to these physical characteristics assigned to the item.

Innumerable situations are possible with regard to this.

If, for example, the processing station must perform a specific processing operation for only one type of wood and the physical characteristics saved include the type of wood, then when the wood arrives it is possible, having identified the identification mark, to know the information relative to the type of wood and to prepare the processing only when the type of wood in question passes through, without performing it when the other types of wood pass through.

If, for example, the processing station were a sorting station and the physical characteristics saved included the type of wood, in the processing station the individual types of wood could be directed towards respective specific processing cycles.

The importance of the set of physical characteristics for the item saved in the respective electronic memory being as complete as possible appears obvious. The more physical characteristics that are saved, the wider the choice of possible processing which can be performed automatically because the necessary information is available.

With regard to this, appropriately, there are two additional characteristics of the process disclosed, which allow the process according to the present invention to be made extremely adaptable, flexible but at the same time very powerful.

The process may comprise, after the operating step i), the additional operating step 1), according to which the physical characteristics of the item saved in the electronic memory dedicated to the identification mark can be updated, adjusting them to the variations made to the item as a result of the processing performed in the processing station. This possibility of updating the information about the physical characteristics each time in each processing station is extremely useful.

Returning to the embodiment described, if for example the processing station were a log debarking station, it would be possible to update this characteristic, indicating the log as debarked.

Moreover, the process may comprise, after the additional operating step i), or after the above-mentioned additional operating step 1), the additional operating step m), according to which all new physical characteristics of the item detected in the processing station are saved in the electronic memory dedicated to the identification mark.

This possibility of adding information about new physical characteristics each time in each processing station, the term new characteristics referring to characteristics that were not examined until that moment, is also very useful and definitively completes the set of options of the process disclosed.

Returning to the embodiment described, if for example the processing station were a measuring station, it would even be possible to feed totally unknown items to the sawmill. In such a case, it would be enough for the measuring station to be the second measuring station in the processing cycle. The items would be measured and examined in it, all of the physical characteristics detected would be saved and associated with the identification mark applied on the item and these characteristics could be used to manage subsequent processing steps on the item in the subsequent processing stations.

As already indicated, the invention is based on the capacity for certain identification of the identification mark, without having to detect the distinguishing characters of the identification mark in an absolute fashion.

Identification occurs by comparing images, therefore the presence of circumstances which make an absolute reading difficult, such as a number which is not written clearly, instead becomes a characteristic of the identification mark and of its image, facilitating recognition with the comparison method. In addition, the image does not only show the identification mark, but also at least a portion of the surface on which the identification mark is applied and any characteristics of this portion of surface, for example a scratch, a patch, etc. contribute to making the image unique and to facilitating recognition of it with the comparison method.

The electronic memories in which the images are saved may be those of an electronic processor which checks and controls the process.

Known mathematical correlation techniques are used to compare the images.

Each image can be divided into a large number, which can be selected as required, of pixels, that is to say portions of image with similar colour. For black and white images, each pixel is characterised by a more or less bright grey colour. It should be noticed that the position of each pixel in the image is known and the brightness of the colour of the pixel can be associated with a number, which therefore mathematically represents the brightness.

Therefore, each pixel in a known position can have an associated number which depends on the brightness of its colour.

In turn, the image may be uniquely characterised by the set of its pixels and precisely by the numbers associated with these pixels. Therefore, considering the numbers associated with the pixels in an image as co-ordinates in an n-dimensional space, in which n is equal to the number of pixels, in this n-dimensional space the image is uniquely mathematically identifiable by this set of n-numbers.

In such a case, to identify the digital image saved which most closely resembles the digital image of the item detected each time before the item enters a processing station, the electronic processor simply identifies the saved image which in the n-dimensional space is the least distant from the image of the item detected each time. This is done using known analytical geometry calculation methods.

## Claims

1. A process for recognising, in a processing cycle performed in sequence in a plurality of separate processing stations, the item to be subjected to the respective processing each time, comprising the following operating steps for each item, to be performed in the first processing station at the latest:
a) application of an identification mark on the surface of the item;
b) association of a dedicated electronic memory with the identification mark;
c) saving of the physical characteristics of the item already known in advance, if they exist, in the electronic memory dedicated to the identification mark ;
and then comprising, in each processing station after the first and for each item to be processed, the following additional operating steps:
e) detection of the image of the identification mark on the surface of the item before the item is fed into the processing station;
g) identification of the identification mark
h) assignment of all of the characteristics saved in the electronic memory dedicated to the identification mark identified in the previous step g) to the item about to enter the processing station;
i) adaptation of the processing to be performed on the item in the processing station to the physical characteristics assigned to the item in the previous step h) the process being **characterised in that** it also comprises, in the first processing station and for each item to be processed, the following additional operating step d): detection of the image of the identification mark on the surface of the item, said image being electronically saved in the electronic memory dedicated to this identification mark;
***in that** after said step e) it comprises the following additional step:*
f) comparison of the image detected during the previous operating step e) with all of the images saved in the various electronic memories dedicated to the various identification marks, identifying the one which most closely resembles the image detected in the previous operating step e);
*and **in that** the identification mark identified in step g) is identified as the one associated with the image saved that was identified in the previous operating step f).*

2. The process according to claim 1, **characterised in that** the images of the item are digital photographs taken using digital matrix cameras.

3. The process according to claim 1 or 2, **characterised**
**in that** after the operating step i) it comprises the additional operating step 1):
the physical characteristics of the item saved in the electronic memory dedicated to the identification mark are updated, adjusting them to the variations made to the item as a result of the processing performed in the processing station.

4. The process according to claim ***3***,
**characterised in that** after the additional operating step i) or after the additional operating step 1) it comprises the additional operating step m):
all new physical characteristics of the item detected in the processing station are also saved in the electronic memory dedicated to the identification mark.

## Patentansprüche

1. Verfahren zur Erkennung des zur jeweiligen Bearbeitung anstehenden Gegenstandes, welcher in einem Arbeitskreislauf in einer Folge von getrennten Bearbeitungsstationen bearbeitet wird, enthaltend die folgenden Bearbeitungsphasen für jeden Gegenstand, an letzterem auszuführen in der ersten Bearbeitungsstation:
a) Anbringung einer Identifikationsmarke an der Oberfläche des Gegenstandes;
b) Zuordnung eines bestimmten elektronischen Speichers zu einer Identifikationsmarke;
c) Sichern der bereits im voraus bekannten physischen Eigenschaften des Gegenstandes, wenn diese vorhanden sind, in dem der Identifikationsmarke gewidmeten elektronischen Speicher;
und dann enthaltend in jeder Bearbeitungsstation, nach der ersten und für jeden zu bearbeitenden Gegenstand, die folgenden zusätzlichen Bearbeitungsphasen:
e) Erfassen der Darstellung der Identifikationsmarke auf der Oberfläche des Gegenstandes bevor der Gegenstand in die Bearbeitungsstation geleitet wird;
g) Erkennung der Identifikationsmarke;
h) Zuordnung zu dem Gegenstand, der in die Bearbeitungsstation eintreten soll, aller Eigenschaften, die in dem der Identifikationsmarke gewidmeten elektronischen Speicher gesichert und in der vorangehenden Phase g) erkannt worden sind;
i) Anpassung der an dem Gegenstand in der Bearbeitungsstation auszuführenden Bearbeitung an die physischen Eigenschaften, die dem Gegenstand in der vorherigen Phase h) zugeordnet worden sind;
wobei das Verfahren **dadurch gekennzeichnet ist, dass** es ebenfalls in der ersten Bearbeitungsstation und für jeden zu bearbeitenden Gegenstand die folgende zusätzliche Betriebsphase d) enthält: Erfassen der Darstellung der Identifikationsmarke auf der Oberfläche des Gegenstandes,
wobei die genannte Darstellung elektronisch gespeichert wird in dem elektronischen Speicher, welcher dieser Identifikationsmarke gewidmet ist; **und dadurch,** dass es nach der genannten Phase e) die folgende zusätzliche Phase enthält:
f) Vergleich der während der vorangegangenen Betriebsphase e) erfassten Darstellung mit allen in den verschiedenen elektronischen Speichern, die den verschiedenen Identifikationsmarken gewidmet sind, gesicherten Darstellungen, wobei die eine identifiziert wird, die der in der vorangegangen Betriebsphase e) erfassten am nächstliegenden ist;
**und dadurch,** dass die in der Phase g) erkannte Identifikationsmarke als die eine erkannt wird, die der gesicherten Darstellung zugeordnet wurde, erkannt in der vorangegangenen Phase f).

2. Verfahren nach Patentanspruch 1, **dadurch gekennzeichnet, dass** die Darstellungen des Gegenstandes Digitalaufnahmen sind, aufgenommen unter Verwendung von digitalen Matrix-Kameras.

3. Verfahren nach Patentanspruch 1 oder 2, **dadurch gekennzeichnet, dass** es nach der Betriebsphase i) die zusätzliche Betriebsphase 1) enthält:
die physischen Eigenschaften, gesichert in dem elektronischen Speicher, welcher der Identifikationsmarke gewidmet ist, werden erneuert, wobei sie den Varianten angepasst werden, die an dem Gegenstand als Ergebnis der in der Bearbeitungsstation ausgeführten Bearbeitung vorgenommen wurden.

4. Verfahren nach Patentanspruch 3, **dadurch gekennzeichnet, dass** es nach der zusätzlichen Betriebsphase i) oder nach der zusätzlichen Betriebsphase 1) die zusätzliche Betriebsphase m) enthält:
alle neuen, in der Bearbeitungsstation erfassten physischen Eigenschaften des Gegenstandes ebenfalls in dem elektronische Speicher gesichert werden, welcher der Identifikationsmarke gewidmet ist.

## Revendications

1. Processus permettant de reconnaître, dans un cycle de traitement effectué en séquence dans une pluralité de postes de traitement différents, l'article devant être soumis au traitement correspondant à chaque fois, y compris les phases de fonctionnement suivantes pour chaque article, à effectuer dans le premier poste de traitement au plus tard:
a) application d'une marque d'identification à la surface de l'article;
b) association d'une mémoire électronique prévue à cet effet avec la marque d'identification;
c) enregistre des caractéristiques physiques de l'article connues à l'avance, le cas échéant, sur la mémoire électronique destinée à l'identification; puis comprenant, dans chaque poste de traitement postérieur au premier et pour chaque article à traiter, les phases de fonctionnement supplémentaires suivantes:
e) détection de l'image de la marque d'identification à la surface de l'article avant que l'article soit amené dans le poste de traitement;
g) identification de la marque d'identification;
h) attribution de toutes les caractéristiques enregistrées sur la mémoire électronique destinée à la marque d'identification identifiée lors de la phase précédente g) à l'article sur le point d'entrer dans le poste de traitement;
i) adaptation du traitement à effectuer sur l'article dans le poste de traitement aux caractéristiques physiques attribuées à l'article lors de la phase précédente h), le processus se **caractérisant en ce qu**'il comprend également, dans le premier poste de traitement et pour chaque article à traiter, la phase de fonctionnement supplémentaire suivante d) : détection de l'image de la marque d'identification à la surface de l'article, ladite image étant enregistrée électroniquement dans la mémoire électronique destinée à cette marque d'identification; en ce qu'après ladite phase e) il comprend la phase supplémentaire suivante:
f) comparaison de l'image détectée lors de la phase de fonctionnement précédente e) avec toutes les images enregistrées dans les différentes mémoires électroniques destinées aux différentes marques d'identification, identifiant celle qui ressemble le plus à l'image détectée lors de la phase de fonctionnement précédente e);
et en ce que la marque d'identification identifiée à la phase g) est identifiée comme celle associée avec l'image enregistrée qui a été identifiée lors de la phase de fonctionnement précédente f).

2. Processus selon la revendication 1, **caractérisé en ce que** les images de l'article sont des photographies numériques prises au moyen d'appareils photo numériques.

3. Processus selon la revendication 1 ou 2, **caractérisé en ce qu'**après la phase de fonctionnement i) il comprend la phase de fonctionnement supplémentaire 1):
les caractéristiques physiques de l'article enregistrées sur la mémoire électronique destinée à la marque d'identification sont mises à jour, avec adaptation aux variations apportées à l'article du fait du traitement effectué dans le poste de traitement.

4. Processus selon la revendication ***3***, **caractérisé en ce qu'**après la phase de fonctionnement supplémentaire i) ou après la phase de fonctionnement supplémentaire 1) il comprend la phase de fonctionnement supplémentaire m) :
toutes les nouvelles caractéristiques de l'article détectées dans le poste de traitement sont également enregistrées sur la mémoire électronique destinée à la marque d'identification.
